# EUROPEAN PATENT SPECIFICATION

(11) **EP 1 912 355 B1**
(45) Date of publication and mention of the grant of the patent: **08.09.2010**
(21) Application number: 06301049.0
(22) Date of filing: 13.10.2006
(51) Int. Cl.: H04B 10/158

(54) **Method and receiver to increase the spectral efficiency of DPSK modulation format**
Verfahren und Vorrichtung zur Verbesserung der spektralen Effizienz eines DPSK Modulationsformats
Méthode et récepteur d'augmentation de l'efficacité spectrale du format de modulation DPSK

(43) Date of publication of application: 16.04.2008
(73) Proprietor: Alcatel Lucent, 75008 Paris (FR)
(72) Inventor: Franz, Bernd, 74336, Brackenheim (DE)
(74) Representative: Rausch, Gabriele

(56) References cited:
- EP-A1- 1 519 499
- WO-A-02/091645
- GB-A- 2 257 319
- US-A1- 2005 088 659
- US-A1- 2006 072 924

## Description

### Technical Field

The present invention relates to a method for demodulating optical Dense Wavelength Division Multiplexing /DWDM/ signals transmitted over an optical transmission system using Differential Phase Shift Keying /DPSK/ modulation format. Furthermore, it is related to a receiver for optical Dense Wavelength Division Multiplexing /DWDM/ signals to be transmitted over an optical fiber link using Differential Phase Shift Keying /DPSK/ modulation format whereas the receiver comprises an optical DPSK demodulator for converting the phase of the optical DWDM signals into amplitude variation using an optical Delay Line Filter /DLF/.

### Background of the invention

The input data stream of an optical transmission system may be viewed as a series of light pulses representing digital bits. The bit rate of current optical transmission systems generally range from 10 Giga bit per second (Gb/s) to 40 Gb/s resulting in light pulses (or bit periods) that are, respectively, 100 to 25 picoseconds (pcs) wide. Receivers in an optical transmission system convert each bit period in the data stream into digital ones or zeros by determining, for each bit period, whether a light pulse has been received (digital one) or not (digital zero).

Current submarine systems are based on Wavelength Division Multiplexing (WDM) technology at 10Gb/s channel bit rate. The transition from 2.5Gb/s to 10Gb/s occurred in 1998-2000 and it is expected that the transition from 10Gb/s to 40Gb/s will be performed in products within the coming five years allowing a further doubling of transmission channels.

The implementation of 40Gb/s systems in existing 10Gb/s wavelength division multiplexing (WDM) fiber links is limited in many cases by the available optical channel bandwidth, which is far below 50 GHz, if this channel spacing is applied. Spectral efficient modulation formats like phase shaped binary transmission (PSBT) and differential quaternary phase shift keying (DQPSK) are required because of suiting to the available bandwidth. The realization of PSBT systems requires limited extension of a Non Return to Zero (NRZ) system, especially the transmitter (Tx) needs minor extension due to its narrow spectrum.

In contrast to PSBT, the DQPSK modulation format needs different electrical/optical modulators and complex optical decoder circuits. But PSBT shows rather bad Optical Signal to Noise Ratio (OSNR) sensitivity in comparison to DPSK modulation. DPSK could be the best suited modulation format, because it offers 3 dB more OSNR margin compared to NRZ On Off Keying (OOK), but requires high bandwidth compared to PSBT, resulting in high penalties.

EP1519499A1 describes the use of a delay line interferometer for demodulating DPSK modulated signals at 10 Gbit/s by applying o differential delay of one bit period. The document mentions also that the delay can vary from precisely one bit while still providing sufficient delay. In particular, it is mentioned that the delay should be between 0,8 and 1,2 times the bit period.

### Summary of the invention

In view of the above, it is an object of the present invention to provide a method and a system allowing to use further the existing hardware for transmission of optical signal e.g. over 10Gb/s equipment when upgrading to higher bit rate like 40Gb/s avoiding excessive penalties like a to bad OSNR.

This object is achieved in accordance with the invention by a method for demodulating optical DWDM signals transmitted over an optical transmission system using DPSK modulation format. The method comprises the step to apply on the received signals after being transmitted over the optical transmission system an optical demultiplexer adapted for a channel spacing of 50 GHz followed by an optical DPSK demodulator to convert the phase of the optical DWDM signal within a channel into amplitude variation using an optical Delay Line Filter (DLF). The DLF is characterized by a differential time delay less than 1 bit period of the data transmitted by the received optical signal. Preferably but not exclusively, the delay is set to a value between 0.5 and 0.75 bit period. Such an embodiment is particularly adapted for optical signals transmitting data at about 40 Gb/s with channel spacing of about 50 GHz. Advantageously, an electronic distortion equalizer can be applied on the received optical signal after being demodulated by the DLF according to on embodiment of the invention.

The invention further relates to a receiver for optical DWDM signals which are transmitted over an optical fiber link using DPSK modulation format whereas the receiver comprises an optical DPSK demodulator for converting the phase of the optical DWDM signals into amplitude variation using an optical DLF after having passed through an optical demultiplexer adapted for a channel spacing of 50 GHz. The characteristic of the receiver is such that its optical DLF applies a differential time delay less than 1 bit period of the data transmitted by the received optical signals.

The optical DPSK demodulator converts phase into amplitude variations by delaying one path of an interferometer by one bit period. This operation includes a differentiation of the transmitted signal, which must be counteracted by applying a precoder at the TX side. By variation of the delay within the interferometer the differentiation will be changed. A reduction of the delay results in an emphasis of higher frequencies. This can be used to counteract the low pass behaviour (after detection) produced by narrowband optical filters. A penalty reduction from >2 dB to ~1 dB is expected. A further reduction is achieved by use of analog and/or digital electronic distortion equalizers.

Advantageous developments of the invention are described in the dependent claims, the following description and the drawings.

### Description of the drawings

An exemplary embodiment of the invention will now be explained further with the reference to the attached drawings in which:
Fig. 1 is a schematic of an optical transmission system with a receiver according to the invention;
Fig. 2 is a graph of the optical signal to noise ratio according to the fixed delay of the DLF.

### Detailed description of preferred embodiments

For the modulation formats like optical duobinary (ODB), differential phase shift keying (DPSK) and differential quadrature phase shift keying (DQPSK), a logical exclusive OR (or modulo 2 addition) is necessary in the modulator or demodulator. As the implementation of such a device in the electrical domain gives rise to difficulties, it has been proposed to implement such a function in the optical domain using an optical delay line interferometer (DLI).

An optical DLI is a simple device which is used in prior art in the following manner. An incoming optical signal is split into two paths. The signal in one path is delayed by a time corresponding to one bit and the signal in the two paths are coherently re-combined. Generally, the splitting and the recombination are each performed in a respective optical 3 dB coupler, in which case the DLI has two outputs, corresponding to the coherent sum and difference respectively of the optical signal and the delayed optical signal. Thus, if the optical signal and the delayed optical signal are in phase, the sum outpout will be comparable in magnitude with the original optical signal whereas the difference output will be approximately zero, whereas if the signal are π radians out of phase the difference output will be comparable in magnitude with the original optical signal whereas the sum output will be approximately zero. If the DPSK signal is coded so that a phase change of π radians corresponds to a digital '1' and a zero phase change corresponds to a digital '0' the sum output of the DLI, when the DLI is correctly aligned, is an ODB signal corresponding to the complement of the data. The detected outputs are applied to respective inputs of a differential amplifier to obtain the received data signal. Thus, an optical DLI can, in principle, act as a decoder for optical DPSK signals, or it can be used to produce ODB signals.

In US2006/0072924 is described a duo-binary transmitter tolerant to a chromatic dispersion. That transmitter includes a pre-coder for generating a first 2-level signal from input binary data and generating a second signal having a waveform obtained by inverting the first signal. The transmitter comprises also a Mach-Zehnder Modulator (MZM) for generating a DPSK modulated optical signal by modulating an input light according to the first signal and the second signal. The modulated signal is then forwarded through a Delay Line Interferometer (DLI) for splitting the DPSK modulated optical signal into a first split signal and a second split signal, delaying the second split signal, and generating a duo-binary optical signal by interfering the first split signal with the second delayed split signal using a coupler, wherein the time required for delaying the second split signal is set to 0.5-0.8 bit.

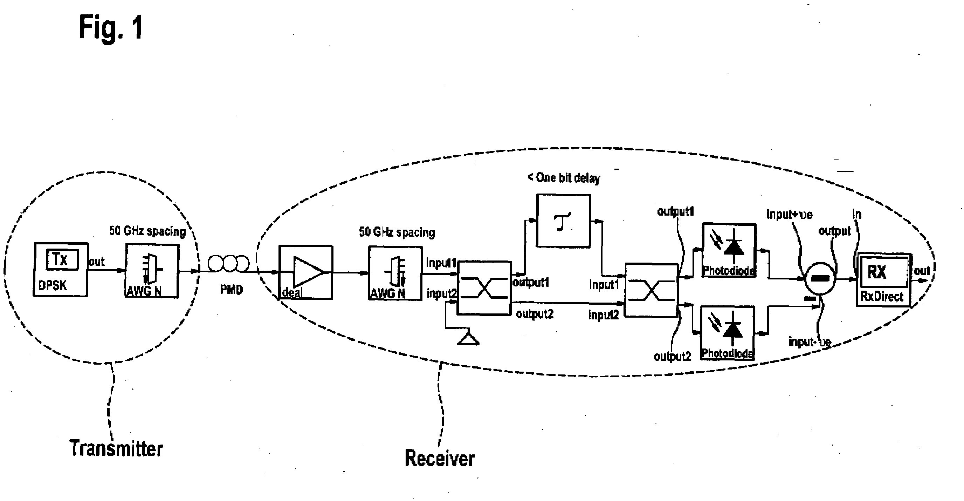

Unlike that prior art, it is proposed in the present invention to apply a similar DLI but at the receiver side that is within a demodulator. In figure 1 is shown schematically an optical transmission system with a receiver according to the invention. The optical signal to be transmitted through the optical transmission system are generated by the transmitter Tx generating DPSK modulated optical signals using some precoder. That optical signals generated at different wavelengths are combined all together using an Array Waveguide Grating (AWG) for N channels with a granularity i.e. optical channel spacing of 50 GHz. Such combined optical Dense Wavelength Division Multiplexing (DWDM) signals are transmitted so to say in parallel through the optical transmission system which can be defined by considering an ideal transmission system plus some Polarization Mode Dispersion (PMD) characteristic. Such optical transmission system ends up into a receiver which comprises at its input some AWG for N channels with 50 GHz granularity to decouple all the different N optical channels. Both used AWGs i.e. one at the transmitter and the other at the receiver side correspond to respectively a multiplexer and a demultiplexer together with some optical band pass filter with 3dB bandwidth. After the demultiplexer at the receiver side is shown on figure 1 a coupler which introduce some phase difference between its two outputs of about 90°, that two outputs being directly connected to the DLI. According to the invention, a differential time delay less than 1 bit period is applied on one of the two paths from the DLI. The resulting optical signals are subtracted using a further coupler before being each transmitted to photodiodes to generate electrical signals to be treated by an electronic receiver Rx.

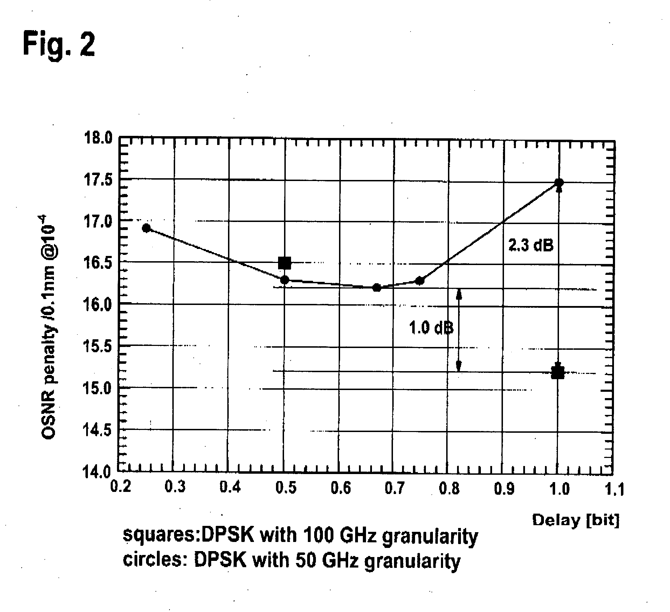

In case of 1 bit delay within the DLI, which represents the prior art with a granularity of 100 GHz, an OSNR penalty of 2.7 dB resp. 2.3 dB (allowing for BER 10⁻¹² resp. 10⁻⁴) inhibits the application of a DWDM scheme with 50 GHz granularity for 40G channel capacity. The problem to be solved is due to the lowpass-filtering of the detected data signal with reduced bandwidth when applying 50 GHz granularity. The solution proposed here is to reduce the delay within the optical DPSK decoder: A reduction of the delay results in an emphasis of higher frequencies. This can be used to counteract the low pass behaviour (after detection) produced by narrowband optical filters. The improvement when implementing an embodiment according to the invention can be clearly recognized by looking at the figure 2 showing a simulation of Optical Signal to Noise Ratio (OSNR) for different fixed delays. The first case shown by the two isolated squares correspond to a prior art optical transmission system with two AWG at 100 GHz granularity. The second case shown by the curve with 5 dots bind together corresponds to the performance of a system according to the invention i.e. using two AWGs with 50 GHz granularity as a function of different chosen delays of the optical decoder. The -3dB bandwidths of the Gaussian shaped AWG have been assumed to be 60 % of the granularity for the simulation. The OSNR penalty reduction can be achieved over a quite wide range of delay, so an exact adjustment of the delay seems not to be required. It is clearly recognizable from figure 2 that a substantial improvement is achieved when applying a delay at the DLI on the optical demodulator of less then a bit period. In fact, 1.0 dB can be achieved instead of 2.3 dB penalty at Bit Error Rate of 10⁻⁴. Therefore, more then 1.3 dB can be achieved when implementing the method or the receiver according to the invention. And the implementation of the present invention allows to double the spectral efficiency of DPSK transmission with only ~1 dB OSNR penalty.

## Claims

1. A method for demodulating on optical signal which has a data rate of about 40 Gb/s and is modulated using Differential Phase Shift Keying /DPSK/ modulation format; wherein said optical signal is transmitted over an optical transmission system as a wavelength channel of a Dense Wavelength Division Multiplexing /DWDM/signal, and wherein wavelength channels of the DWDM signal are multiplexed using a channel spacing of 50 GHz; said method comprises the steps of
- demultiplexing said DWDM signal using a wavelength demultiplexer adapted for a channel spacing of 50 GHz and
- applying an optical DPSK demodulator to convert the phase of the optical signal into amplitude variation using an optical Delay Line Filter /DLF/ which applies to the received optical signal a differential time delay of less than 1 bit period of the data signal transmitted by the received optical signal

2. The method according to claim 1 whereby the delay is set between 0.5 and 0.75 bit period.

3. The method according to claim 1 whereby an electronic distortion equalizer is applied after the optical DLF.

4. A receiver for an optical Dense Wavelength Division Multiplexing /DWDM/ signal transmitted over an optical fiber link, wherein said DWDM signal contains wavelength channels at a channel spacing of 50 GHz carrying optical signals which are modulated with data signals having data rates of about 40 Gb/s using Differential Phase Shift Keying /DPSK/ modulation format; said receiver comprises
- a wavelength demultiplexer adapted for a channel spacing of 50 GHz for demultiplexing said DWDM signal;
- an optical DPSK demodulator for converting the phase of the optical signals from one of the wavelength channels into amplitude variations; the optical DPSK demodulator comprising an optical Delay Line Filter /DLF/ designed to apply to the received optical signal a differential time delay of less than 1 bit period of the data transmitted; and
- an electronic receiver (Rx) for 40 Gb/s data signals.

5. The receiver according to claim 4 whereby the delay of the DLF is chosen between 0.5 and 0.75 bit period.

6. The receiver according to claim 4 whereby the DLF is a Delay Line Interferometer /DLI/.

7. The receiver according to claim 4 whereby it comprises an electronic distortion equalizer for treating the received optical signal after the optical DLF.

## Patentansprüche

1. Ein Verfahren zum Demodulieren eines optischen Signals, welches eine Datenrate von ca. 40 Gb/s aufweist und unter Verwendung des Modulationsformats der differenziellen Phasenumtastung IDPSK / moduliert wird; wobei das besagte optische Signal über ein optisches Übertragungssystem als ein Wellenlängenkanal eines Dichte Wellenlängen-Multiplex /DWDM/-Signals übertragen wird, wobei die Wellenlängenkanäle des DWDM-Signals unter Verwendung eines Kanalabstands von 50 GHz gemultiplext werden; wobei das besagte Verfahren die folgenden Schritte umfasst:
- Demultiplexen des besagten DWDM-Signals unter Verwendung eines für einen Kanalabstand von 50 GHz ausgelegten Wellenlängendemultiplexers, und
- Anwenden eines optischen DPSK-Demodulators zum Verwandeln der Phase des optischen Signals in eine Amplitudenabweichung unter Verwendung eines optischen Verzögerungsleitungsfilters /DLF/, welcher auf das empfangene optische Signal eine Differenzzeitverzögerung von weniger als einer 1-Bit-Periode des von dem empfangenen optischen Signal übertragenen Datensignals anwendet.

2. Das Verfahren nach Anspruch 1, wobei die Verzögerung zwischen 0,5 und 0,75-Bit-Periode eingestellt wird.

3. Das Verfahren nach Anspruch 1, wobei nach dem optischen DLF eine elektronische Entzerrung erfolgt.

4. Ein Empfänger für ein optisches Dichte Wellenlängen-Multiplex /DWDM/-Signal, welches über einen faseroptischen Link übertragen wird, wobei das besagte DWDM-Signal Wellenlängenkanäle mit einem Kanalabstand von 50 GHz enthält, welche optische Signale transportieren, die mit Datensignalen mit Datenraten von ca. 40 Gb/s unter Verwendung des Modulationsformats der differenziellen Phasenumtastung /DPSK / moduliert werden; wobei der Empfänger umfasst:
- Einen Wellenlängen-Demultiplexer, welcher für einen Kanalabstand von 50 GHz für das Demultiplexen des besagten DWDM-Signals ausgelegt ist;
- einen optischen DPSK-Demodulator zum Umwandeln der Phase des optischen Signals von einem der Wellenlängenkanäle in Amplitudenabweichungen; wobei der optische DPSK-Modulator einen optischen Verzögerungsleitungsfilter /DLF/ umfasst, welcher dazu ausgelegt ist, eine differenzielle Zeitverzögerung von weniger als einer 1-Bit-Periode der übertragenen Daten auf das empfangene optische Signal anzuwenden; und
- einen elektronischen Empfänger (Rx) für 40 Gb/s-Datensignale.

5. Der Empfänger nach Anspruch 4, wobei die Verzögerung des DLF zwischen 0,5 und 0,75 Bit-Periode gewählt wird.

6. Der Empfänger nach Anspruch 4, wobei der DLF ein Verzögerungszeit-Interferometer /DLI/ ist.

7. Der Empfänger nach Anspruch 4, umfassend einen elektronischen Entzerrer zum Behandeln des empfangenen optischen Signals nach dem optischen DLF.

## Revendications

1. Procédé de démodulation d'un signal optique qui présente un débit de données d'environ 40 Gb/s et qui est modulé en utilisant un format de modulation par déplacement de phase différentielle (DPSK - Differential Phase Shift Keying) ; dans lequel ledit signal optique est transmis par l'intermédiaire d'un système de transmission optique comme canal de longueur d'onde d'un signal de multiplexage par répartition en longueur d'onde dense (DWDM - Dense Wavelength Division Multiplexing), et dans lequel des canaux de longueur d'onde du signal DWDM sont multiplexés en utilisant un espacement entre canaux de 50 GHz ; ledit procédé comprend les étapes suivantes
- démultiplexer ledit signal DWDM en utilisant un démultiplexeur de longueur d'onde adapté pour un espacement entre canaux de 50 GHz et
- appliquer un démodulateur DPSK optique pour convertir la phase du signal optique en une variation d'amplitude en utilisant un filtre à ligne à retard (DLF - Delay Line Filter) optique qui applique au signal optique reçu un retard différentiel inférieur à une période de 1 bit du signal de données transmis par le signal optique reçu.

2. Procédé selon la revendication 1 dans lequel le retard est défini entre une période de 0,5 bit et une période de 0,75 bit.

3. Procédé selon la revendication 1 dans lequel un égaliseur de distorsion électronique est appliqué après le DLF optique.

4. Récepteur pour un signal de multiplexage par répartition en longueur d'onde dense (DWDM - Dense Wavelength Division Multiplexing) optique transmis par l'intermédiaire d'une liaison par fibre optique, dans lequel ledit signal DWDM contient des canaux de longueur d'onde, selon un espacement entre canaux de 50 GHz, transportant des signaux optiques qui sont modulés avec des signaux de données présentant des débits de données d'environ 40 Gb/s en utilisant un format de modulation par déplacement de phase différentielle (DPSK - Differential Phase Shift Keying) ; ledit récepteur comprend
- un démultiplexeur de longueur d'onde adapté pour un espacement entre canaux de 50 GHz pour démultiplexer ledit signal DWDM ;
- un démodulateur DPSK optique pour convertir la phase des signaux optiques provenant d'un des canaux de longueur d'onde en des variations d'amplitude ; le démodulateur DPSK optique comprenant un filtre à ligne à retard (DLF - Delay Line Filter) optique conçu pour appliquer au signal optique reçu un retard différentiel inférieur à une période de 1 bit des données transmises ; et
- un récepteur électronique (Rx) pour des signaux de données de 40 Gb/s.

5. Récepteur selon la revendication 4 dans lequel le retard du DLF est défini entre une période de 0,5 bit et une période de 0,75 bit.

6. Récepteur selon la revendication 4 dans lequel le DLF est un interféromètre à ligne à retard (DLI - Delay Line interferometer).

7. Récepteur selon la revendication 4 comprenant un égaliseur de distorsion électronique pour traiter le signal optique reçu après le DLF optique.
